# EUROPEAN PATENT APPLICATION

(11) **EP 4 663 288 A1**
(43) Date of publication of application: **17.12.2025**
(21) Application number: 24766199.4
(22) Date of filing: 17.01.2024
(51) Int. Cl.: B01J 20/04, B01J 20/30

(54) **MESOPOROUS ALUMINUM-BASED LITHIUM ADSORBENT, AND PREPARATION METHOD THEREFOR AND USE THEREOF**

(30) Priority: 07.03.2023 CN 202310210143
(71) Applicant: Chengdu Chemphys Chemical Industry Co., Ltd, Hi-Tech District Chengdu Sichuan 610041 (CN); Sinolithium Materials Limited, Hong Kong 621000 (HK)
(72) Inventor: YANG, Jinfeng, Chengdu, Sichuan 610041 (CN); DAI, Yihua, Chengdu, Sichuan 610041 (CN); QI, Hao, Chengdu, Sichuan 610041 (CN); MENG, Qiang, Chengdu, Sichuan 610041 (CN); BAN, Wenjun, Chengdu, Sichuan 610041 (CN); CAI, Rongfu, Chengdu, Sichuan 610041 (CN)
(74) Representative: Santarelli
(86) International application number: PCT/CN2024/072671
(87) International publication number: WO 2024/183476

(57) **Abstract**

The present invention relates to a mesoporous aluminum-based lithium adsorbent as well as a preparation method and application thereof. The preparation method comprises the following steps: 1) preparing a mesoporous aluminum-based lithium adsorbent precursor; 2) molding and granulating; and 3) washing and drying to obtain the mesoporous lithium adsorbent. The obtained mesoporous aluminum-based lithium adsorbent is a sphere-like porous material, precursor pores before molding and granulation are irregular polygons, and the most probable pore size is 3-20 nm. The preparation process is simple, the obtained adsorbent is high in lithium adsorption capacity, high in lithium extraction rate and good in cycling stability, the lithium elution rate and the lithium recovery rate are both larger than 95%, and the mesoporous aluminum-based lithium adsorbent can be used for lithium extraction of salt lake brine with the high magnesium-lithium ratio and high-sodium and potassium salt lake brine with high selectivity.

## Description

### Technical Field

The present invention relates to the field of chemical new material preparation technology, specifically to a mesoporous aluminum-based lithium adsorbent and a preparation method and application thereof.

### Background of the Invention

Lithium is an important raw material for chemical energy storage power batteries, known as the "white oil" and the most important strategic resource in the 21st century. The total global lithium resources are abundant, but high-quality resources are scarce. High-quality lithium resources are mainly distributed in Australia (spodumene), Chile and Argentina (salt lake brine). According to data from the United States Geological Survey, the global lithium metal resources in 2021 are approximately 89 million tons; The "Lithium Triangle" in South America spans the borders of Argentina, Bolivia, and Chile, forming a lithium resource geographic triangle under the salt flats, which holds about 58% of the world's lithium resources. The lithium resources from China's salt lakes account for about 85% of the country's total reserves, and ore resources account for about 15%. The lithium resources from salt lakes (brine) are mainly distributed in Qinghai, Tibet and Sichuan. The lithium resources from Qinghai salt lake have low lithium content and high magnesium-lithium ratio; The lithium resources from Tibet brine include both carbonate type (such as Zabuye Salt Lake) and mixed type of chloride and sulfate. The lithium extraction from salt lake brine in China has higher technical requirements compared to those of lithium extraction from foreign salt lake brine.

With the rapid development of new energy vehicles and chemical energy storage industries, the current production and supply of lithium salts cannot meet the demand. Salt lake brine resources account for over 70% of global lithium resources. Lithium extraction from salt lake brine is more cost-effective than lithium extraction from lithium ores. China is increasing efforts to extract lithium from brine lithium resources (i.e. salt lake lithium resources). Direct extraction of lithium salts from the original brine has become the main direction for rapidly increasing lithium salt production capacity at present.

The adsorption method is one of the most widely used and practical processes in lithium extraction from salt lakes. The adsorption method mainly relies on adsorbents with specific adsorption capacity for lithium ions to achieve the separation of lithium ions. Afterwards, the lithium ions are eluted with eluents to form a lithium ion solution, which is then concentrated and produced into lithium salts. The adsorption method is not limited by the grade of brine and has strong applicability. It can be used for lithium extraction both using brine with high magnesium-lithium ratio and seawater with low lithium concentration. It also has the advantages of simple process, green environmental protection, and high safety. Currently, both domestic and foreign researchers are committed to developing a lithium extraction agent with stable structure, low solution loss, high adsorption capacity, fast adsorption rate, and simple preparation method. The traditional layered aluminum salt adsorbents have significantly improved selectivity for lithium as their interlayer spacing decreases. Such adsorbents are mainly targeted at salt lake brine with high Mg/Li ratio. Due to the slow adsorption and desorption process, the production capacity of lithium extraction equipment is relatively low. In addition, there are problems such as poor selectivity in the separation and extraction process of high sodium potassium salt lake brine. In practical use, we will also face lithium extraction from high sodium potassium salt lake brine, as well as lithium recovery problems from various high sodium lithium containing mother liquids, high sodium potassium lithium containing wastewater, and high sodium and high magnesium salt lake brine. There are few reports on such lithium extraction adsorbents.

Salt lakes are ecosystems and resource systems formed under special geographical and environmental conditions, which are susceptible to the impact of climate change and human activities. The ecological environment in salt lake regions is usually fragile and difficult to restore. Such regions also generally lack freshwater resources. The aluminum-based lithium adsorbents have lower solution loss during use than that of titanium based and manganese based lithium adsorbents, making them more environmentally friendly. Aluminum-based lithium adsorbent particles are usually obtained by mixing a binder with a certain amount of powdered aluminum lithium adsorbent (chemical formula: LiCl·mAl(OH)₃-nH2O) and extrusion molding. This method has an uneven distribution of active powder in the polymer skeleton material, and the stress distribution inside and outside the adsorbent particles is also uneven. Therefore, the aluminum-based lithium adsorbent is prone to brittle damage during the adsorption and lithium extraction cycle, resulting in a high solution rate. Long term use will result in trace amounts of dissolved adsorbents entering the salt lake brine, and long-term accumulation will have an impact on the salt lake ecosystem. Therefore, continuous development of aluminum-based lithium adsorbents with better lithium extraction performance and higher stability has become a consensus in the salt lake lithium extraction industry.

The raw material composition, synthesis, and molding process conditions of adsorbent materials have significant impacts on the formation and performance of pore structures (pore size, morphology, and pore size distribution). Porous materials are materials with a network structure composed of interconnected or enclosed pores. Porous materials are usually divided into microporous materials (pore size less than 2nm), mesoporous materials (pore size between 2-50nm), and macroporous materials (pore size greater than 50nm) based on their pore size. Mesoporous materials have such advantages as large surface area, high adsorption capacity, stable structure, and adjustable pore size. Mesoporous materials have been widely used in photocatalysis, insulation materials, biomaterials, lithium-ion battery separators, and other fields. At present, there is no report on mesoporous aluminum-based lithium extraction adsorbents with quantitative descriptions.

### Summary of the Invention

The purpose of the present invention is to overcome the shortcomings of the prior art and provide a mesoporous aluminum-based lithium adsorbent. The adsorbent is not only suitable for lithium extraction from brine with high magnesium-lithium ratio and salt lake brine with low lithium concentration, but also effectively used for lithium extraction from high sodium potassium salt lake brine and lithium containing wastewater, all exhibiting high adsorption activity and selectivity, and extremely low solution loss during cyclic use.

Another purpose of the present invention is to provide a preparation method for the adsorbent. The preparation method has the advantages of easy availability of raw materials, simple operation, low energy consumption, and the obtained adsorbent exhibits good cycling stability, making it easy to achieve large-scale industrial production.

To achieve the above purpose, the specific technical solution is as follows:
A preparation method for a mesoporous aluminum-based lithium adsorbent, comprising the following steps:
step 1 preparing a mesoporous aluminum-based lithium adsorbent precursor:
   mixing polyaluminum, lithium source, and water to obtain an aluminum-lithium mixed solution through ultrasonic stirring, then, gradually adding alkali liquor to the aluminum-lithium mixed solution for precipitation reaction, controlling the adding time as 20-90 minutes, controlling the synthesis reaction temperature as 0-80 °C, and controlling the pH at the reaction endpoint as 5-9; filtering and separating the aluminum-lithium precursor precipitate from the liquid, and then drying and crushing it to obtain the mesoporous aluminum-based lithium adsorbent precursor;
step 2 molding and granulating:
   A) preparation of a composite resin: mixing a polymer resin with an organic solvent, adding an appropriate amount of additive, stirring until being completely dissolved, to obtain a composite resin adhesive;
   B) doping and blending: mixing the composite resin adhesive obtained from A) with the mesoporous aluminum-based lithium adsorbent precursor obtained from step 1 in proportion, and stirring evenly to obtain a blending slurry;
   C) granulating: dropping the blending slurry into the solidification liquid for solidification and granulation through a granulation device, and then sieving to obtain a molded adsorbent;
and step 3 washing and drying:
   washing, activating and drying the molded adsorbent obtained from step 2 to obtain the mesoporous aluminum-based lithium adsorbent.

As a preferred implementation of the present application, the polyaluminum in step 1 is drinking water grade polyaluminum chloride or food grade polyaluminum chloride; the lithium source is any one or a mixture of lithium chloride, lithium hydroxide, lithium carbonate, and lithium sulfate; the alkali liquor is any one of sodium carbonate, sodium hydroxide, or potassium hydroxide aqueous solutions, and the adding time is more preferably 30-60min; the synthesis reaction temperature is more preferably 20-40°C, and the concentration of the alkali liquor is 2.5-5.0mol/L.

As a preferred implementation of the present application, the addition amount of polyaluminum and lithium source in step 1 is 4.5:1-1.95:1 according to the molar ratio of aluminum to lithium; a solid content is controlled as 15wt%-35wt% by the amount of water added.

As a preferred implementation of the present application, the precursor drying method in step 1 is one of vacuum drying, freeze drying, flash drying, microwave drying and hot air drying; the moisture content of the obtained mesoporous aluminum-based lithium adsorbent precursor is controlled as 1%-6%; the mesoporous aluminum-based lithium adsorbent precursor has mesopores accounting for more than 85%, an average pore size of 3-30nm, pores of irregular polygons, and the most probable pore size (which is the pore size occurring most frequently) of 3-15nm averagely.

As a preferred implementation of the present application, the polymer resin in A of step 2 is any one of fluorinated polyvinyl chloride, chlorinated polyvinyl chloride, polyarylsulfone or sulfonated polysulfone; the additive is one of polyvinyl alcohol, polyether sulfone, or chlorinated polyvinyl chloride; the obtained resin adhesive has a solid content controlled as 5wt%-20wt%.

As a preferred implementation of the present application, the organic solvent in A of step 2 is any one of dimethylacetamide, tetrahydrofuran, or dimethylformamide.

As a preferred implementation of the present application, the mass ratio of the mesoporous aluminum-based lithium adsorbent precursor in B of step 2 to the composite resin adhesive is 1:1.2-2, and the solid content of the blending slurry is controlled as 35%-50wt%.

As a preferred implementation of the present application, the solidification liquid in C of step 2 is any one of water or inorganic salt aqueous solution; the inorganic salt aqueous solution has a mass concentration of 0.5%-5wt%, and the sieving pore size is controlled as 0.2-3mm.

As a preferred implementation of the present application, the drying method in step 3 is more preferably any one of freeze drying, flash drying or vacuum drying, and the product moisture content is controlled as 1wt%-65 wt %, more preferably 5 wt %-60 wt %.

When freeze drying is selected, the freeze drying process is carried out with a vacuum degree of 0pa-10pa, a temperature of -50°C-5°C, and a time for 3h-20h, preferably 3h-12h.

Preferably, the mesoporous aluminum-based lithium adsorbent has mesopores accounting for more than 90%, an average pore size of 3-20nm, and the most probable pore size of 3-10nm, and the mesoporous aluminum-based lithium adsorbent product is spherical or sphere-like particle.

Compared with the prior art, the present invention has the following beneficial effects:
(1) The preparation method has simple process and low energy consumption; the obtained product is sphere-like high-performance composite mesoporous aluminum-based lithium adsorbent material. The microstructure of the material is a porous material closely interwoven with active powder and a network polymer skeleton material, with high porosity and stable structure.
(2) The prepared mesoporous aluminum-based lithium adsorbent can be used for lithium extraction from salt lake brine with high magnesium-lithium ratio and low grade, as well as effectively for lithium extraction from high sodium potassium salt lake brine. The lithium adsorption capacity is 2.5-5.0g/L (6.5-13.5mg/g), and it exhibits high lithium ion selectivity. The sodium-lithium ratio, magnesium-lithium ratio, boron-lithium ratio, and potassium-lithium ratio can be reduced to below 0.5:1 upon one separation, therefore the impurity removal load in subsequent production processes is significantly reduced, and the Li elution rate and Li recovery rate are both greater than 95%.
(3) The prepared mesoporous aluminum-based lithium adsorbent can be used in salt lake brine with pH value of 3-10. The aluminum-based lithium adsorbent was used continuously for 1500 times in the pilot test, and its absorption-desorption did not show any degradation, with an extremely low solution rate. The mesoporous aluminum-based lithium adsorbent of the present invention is used for lithium extraction in salt lake brine (most salt lake brine at home and abroad has a pH value of 4.0-8.0), with an annual loss rate of less than 2%.
(4) The ecological fragility of salt lake mining areas makes environmental restoration difficult. The mesoporous aluminum-based lithium adsorbent of the present invention is composed of environmentally friendly polymer resin and mesoporous aluminum-based lithium adsorbent precursor, which is used environmentally friendly.

### Brief Description of the Drawings

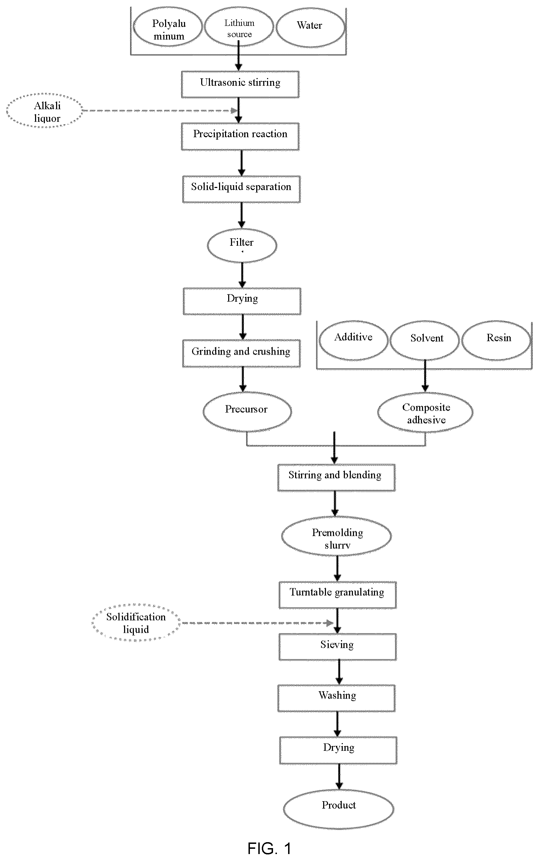

Fig. 1 is a schematic diagram of the preparation process flow of the mesoporous aluminum-based lithium adsorbent in the present invention.
Fig. 2 shows a TEM image of the mesoporous aluminum-based lithium adsorbent precursor powder prepared in Embodiment 1;
Fig. 3 shows a low-angle diffraction XRD spectrum of the mesoporous aluminum-based lithium adsorbent precursor powder prepared in Embodiment 1;

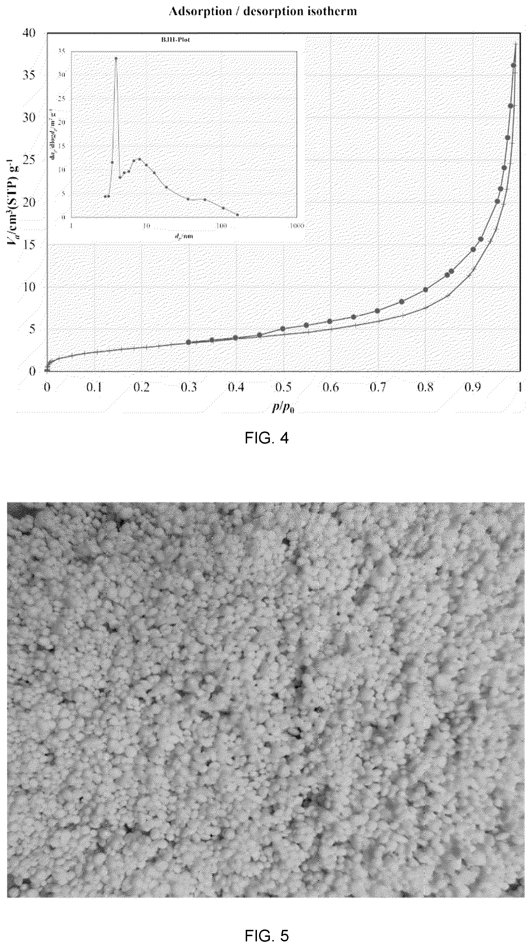

Fig. 4 shows an isothermal adsorption and desorption curve and BJH pore size distribution curve of the mesoporous aluminum-based lithium adsorbent sample prepared in Embodiment 1;
Fig. 5 shows a photo of the mesoporous aluminum-based lithium adsorbent sample prepared in Embodiment 1;
Fig. 6 shows an SEM photo of the cross section of the mesoporous aluminum-based lithium adsorbent prepared in Embodiment 1;
Fig. 7 shows an XRD spectrum of the mesoporous aluminum-based lithium adsorbent sample prepared in Embodiment 1;

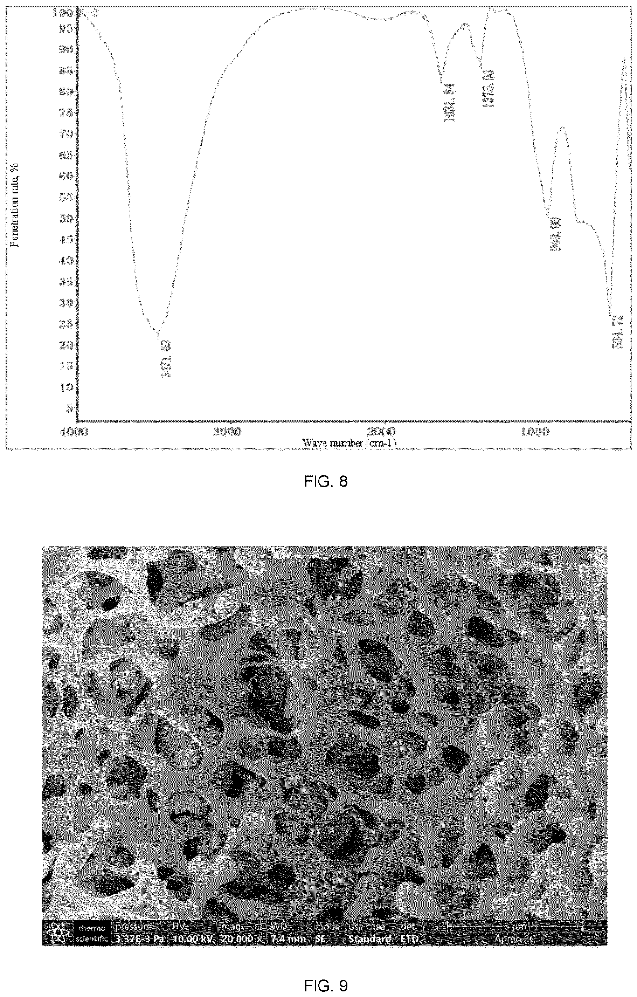

Fig. 8 shows an infrared spectrum of the mesoporous aluminum-based lithium adsorbent prepared in Embodiment 1;
Fig. 9 shows an SEM photo of the cross section of the mesoporous aluminum-based lithium adsorbent prepared in Embodiment 6;
Fig. 10 shows an XRD spectrum of the mesoporous aluminum-based lithium adsorbent sample prepared in Embodiment 6;
Fig. 11 shows a TEM image of the mesoporous aluminum-based lithium adsorbent precursor powder prepared in Embodiment 6;

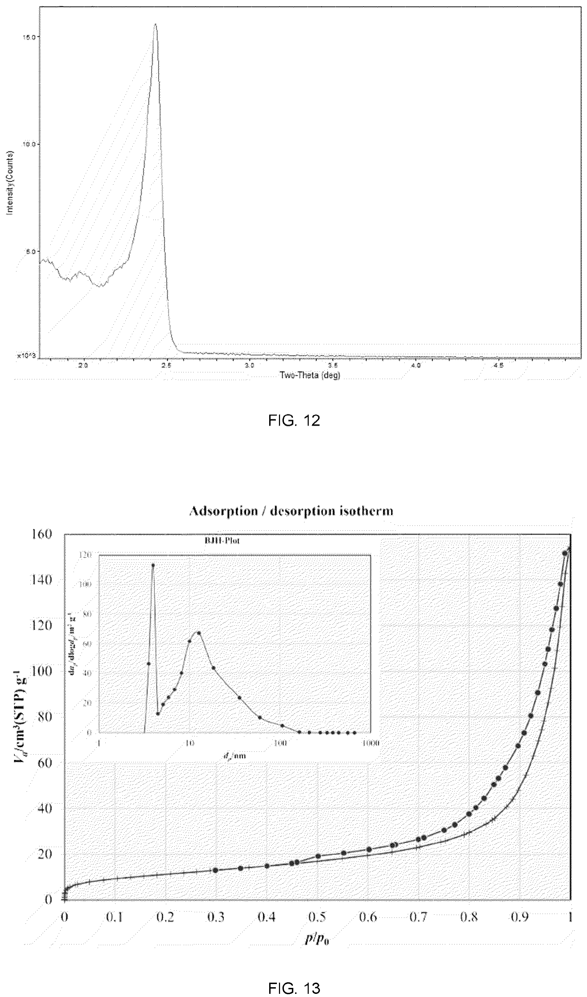

Fig. 12 shows a low-angle diffraction XRD spectrum of the mesoporous aluminum-based lithium adsorbent precursor powder prepared in Embodiment6;
Fig. 13 shows an isothermal adsorption and desorption curve and BJH pore size distribution curve of the mesoporous aluminum-based lithium adsorbent sample prepared in Embodiment 6;
Fig. 14 shows an isothermal adsorption and desorption curve of the material sample prepared in Comparative Example 5; and
Fig. 15 shows a TEM photo of the adsorbent sample prepared in Comparative Example 5.

### Detailed Description of Embodiments

A preparation method for a mesoporous aluminum-based lithium adsorbent, comprising the following steps:
step 1 preparing a mesoporous aluminum-based lithium adsorbent precursor:
   mixing polyaluminum, lithium source, and water to obtain an aluminum-lithium mixed solution through ultrasonic stirring, then, gradually adding alkali liquor to the aluminum-lithium mixed solution for precipitation reaction, and controlling the pH at the reaction endpoint as 5-9, which can be specifically 5, 5.5, 6, 6.5, 7, 7.5, 8, 8.5, 9; filtering and separating the mesoporous aluminum-based lithium adsorbent precursor precipitate from the liquid, and then drying and crushing it to obtain the mesoporous aluminum-based lithium adsorbent precursor;
step 2 molding and granulating:
   A) preparation of a composite resin: mixing a polymer resin with an organic solvent, adding an appropriate amount of additive, stirring until being completely dissolved, to obtain a composite resin adhesive;
   B) doping and blending: mixing the composite resin adhesive obtained from A) with the mesoporous aluminum-based lithium adsorbent precursor obtained from step 1 in proportion, and stirring evenly to obtain a blending slurry;
   C) granulating: dropping the blending slurry into the solidification liquid for solidification and granulation through a granulation device, and then sieving to obtain a molded adsorbent;
and step 3 washing and drying:
   washing, activating and drying the molded adsorbent obtained from step 2 to obtain the mesoporous aluminum-based lithium adsorbent.

After repeated tests and researches on the present invention, the additives and the addition amounts involved in the preparation method are defined, and the prepared aluminum-based lithium adsorbent has excellent performance and low preparation cost.

The polyaluminum in step 1 is drinking water grade polyaluminum chloride or food grade polyaluminum chloride; the lithium source is any one or a mixture of lithium chloride, lithium hydroxide, lithium carbonate or lithium sulfate; the alkali liquor is any one of sodium carbonate, sodium hydroxide, or potassium hydroxide aqueous solutions, and the concentration of the alkali liquor ranges from 1mol/L to 5mol/L, which can specifically be 1mol/L, 1.5mol/L, 2mol/L, 2.5mol/L, 3mol/L, 3.5mol/L, 4mol/L, 4.5mol/L, 5mol/L, 5.5mol/L, 6mol/L, more preferably 2.5mol/L-5mol/L. The adding time is more preferably 30-60min.

Preferably, the addition amount of polyaluminium and lithium source in step 1 is 4.5:1-1.95:1 according to the molar ratio of aluminum to lithium, which can specifically be 4.5:1, 4:1, 3.5:1, 3:1, 2.5:1, 1.95:1; a solid content is controlled as 15wt%-35wt% by the amount of water added, which can specifically be 15%, 20%, 25%, 30%, 35%; more preferably 20%-30%.

Preferably, the precipitation reaction temperature in step 1 is 10-60°C, which can specifically be 10°C, 15°C, 20°C, 25°C, 30°C, 35°C, 40°C, 45°C, 50°C, 55°C, 60°C, more preferably 20-40°C.

Preferably, the precursor drying method in step 1 is vacuum drying, freeze drying, flash drying, microwave drying or infrared drying. After drying, the water content of the material is controlled as 1%-6%, which can specifically be 1%, 1.5%, 2%, 2.5%, 3%, 3.5%, 4%, 4.5%, 5%, 5.5%, 6%; more preferably 1-4.5%. The aluminum-based lithium adsorbent precursor has mesopores accounting for more than 80%, more preferably more than 90%, with an average pore size of 3-20nm. The pores are irregular polygons, and the most probable pore size is 3-10nm.

Preferably, the polymer resin in A of step 2 is any one of fluorinated polyvinyl chloride, chlorinated polyvinyl chloride, polyarylsulfone or sulfonated polysulfone; the additive is one of polyvinyl alcohol, polyethersulfone, or chlorinated polyvinyl chloride, and the obtained resin adhesive has a solid content controlled as 5-20wt%, more preferably 10-15 wt%.

Preferably, the mass ratio of the mesoporous aluminum-based lithium adsorbent precursor in B of step 2 to the composite resin adhesive is 1:1.2-2; the blending slurry has a solid content controlled as 35 wt %-50wt%, more preferably 40 wt %-50 wt %.

Preferably, the solidification liquid in C of step 2 is either of water or inorganic salt solution, with a mass concentration of 0.5wt% -5wt% in the inorganic salt aqueous solution. The sieving pore size is controlled as 0.2-3mm, more preferably 0.3-1.5mm.

Preferably, the drying method in step 3 is more preferably any one of freeze drying, flash drying or vacuum drying, and the product moisture content is controlled as 1wt%-65 wt %, more preferably 5 wt %-60 wt %.

Preferably, the obtained aluminum-based lithium adsorbent has mesopores accounting for more than 90%, an average pore size of 3-20nm, and the most probable pore size of being more preferably 3-10nm.

The main solution of the present invention and further alternatives thereof may be combined freely to form a plurality of solutions, all of which may be adopted and claimed in the present invention; and each alternative can be arbitrarily combined with other compatible alternatives according to the present invention. Multiple combinations are clear to those skilled in the art based on the prior art and the common general knowledge after understanding the solutions of the present invention, all of which are technical solutions to be protected by the present invention and are not exhaustive here.

The implementation of the present invention is described below through specific examples, and those skilled in the art can easily understand other advantages and effects of the present invention from the contents disclosed in the Description. The present invention can also be implemented or applied in other different specific implementations, and various details in the Description can also be modified or changed based on different views and applications without departing from the spirit of the present invention. It should be noted that, the following embodiments and the features in the embodiments may be combined with each other in a non-conflicting situation.

It should be noted that, to make the objectives, technical solutions, and advantages of the embodiments of the present invention clearer, the following paragraphs will depict the technical solution of the present invention with reference to the accompanying drawings in the embodiments of the present invention. Apparently, the embodiments as described are parts of the embodiments of the present invention, rather than all of the embodiments. Generally, the components in the embodiments of the present invention described and shown in the figures herein may be arranged and designed in various configurations. According to the present invention, the specific operations in the stirring, including mechanical stirring and high-speed dispersion, are not specified, and the brine in the present invention is also not specified, any operations and brine well known to those skilled in the art are available.

For data analysis in the following examples, K, Ca, Na, Mg, B and Al are analyzed by ICP spectrometry, Cl is analyzed by spectrophotometry colorimetry, Li is determined by atomic absorption spectrometry, and sulfate radical is determined by barium sulfate turbidimetry (GB 13580.6-92). The pore size distribution in the following embodiments is determined using an automatic surface area and pore size analyzer BELSORP MAX X; the model of XRD meter is Rigaku Ultima IV; the model of TEM electron microscope is Talos F200S; the model of scanning electron microscope (SEM) is American FEI Inspect F50 (FSEM); The model of Fourier transform infrared spectrometer (FTIR) is FT-IRThermo Fisher Nicolet Is5.

Unless particularly stated elsewhere, % recited in this application shows the mass percentage, namely wt%.

The chemical composition of the simulated brine used in the following embodiments is as follows:
Simulated brine 1:

| **PH** | **Li⁺** | **Na⁺** | **K⁺** | **Ca²⁺** | **Mg²⁺** | **Cl-** | **SO42-** | **B³⁻** |
|---|---|---|---|---|---|---|---|---|
| | | | | | mg/L | | | |
| **4.0** | 268 | 2900 | 22460 | 43 | 113000 | 292700 | 32400 | 920 |

Simulated brine 2:

| **PH** | **Li⁺** | **Na⁺** | **K⁺** | **Ca²⁺** | **Mg²⁺** | **Cl-** | **SO42-** | **B³-** |
|---|---|---|---|---|---|---|---|---|
| | | | | | mg/L | | | |
| **7.1** | 203 | 56900 | 26900 | 120 | 48000 | 186700 | 8900 | 320 |

Simulated brine 3:

| **PH** | **Li⁺** | **Na⁺** | **K⁺** | **Mg²⁺** | **Ca²⁺** | **Cl⁻** | **SO₄²-** | **B³-** |
|---|---|---|---|---|---|---|---|---|
| | | | | | mg/L | | | |
| **6.5** | 793 | 101000 | 9760 | 2210 | 911 | 168200 | 9600 | 683 |

### Embodiment 1:

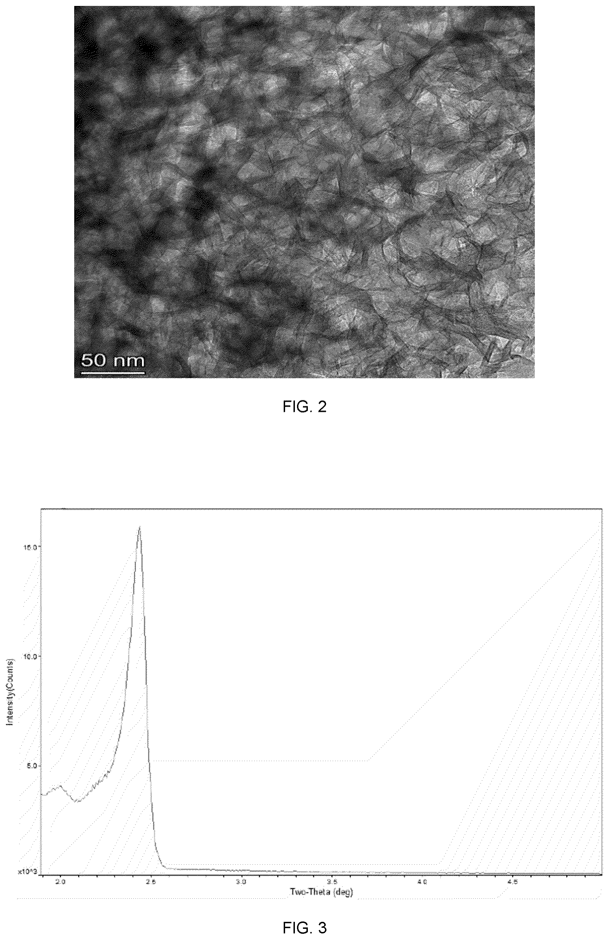

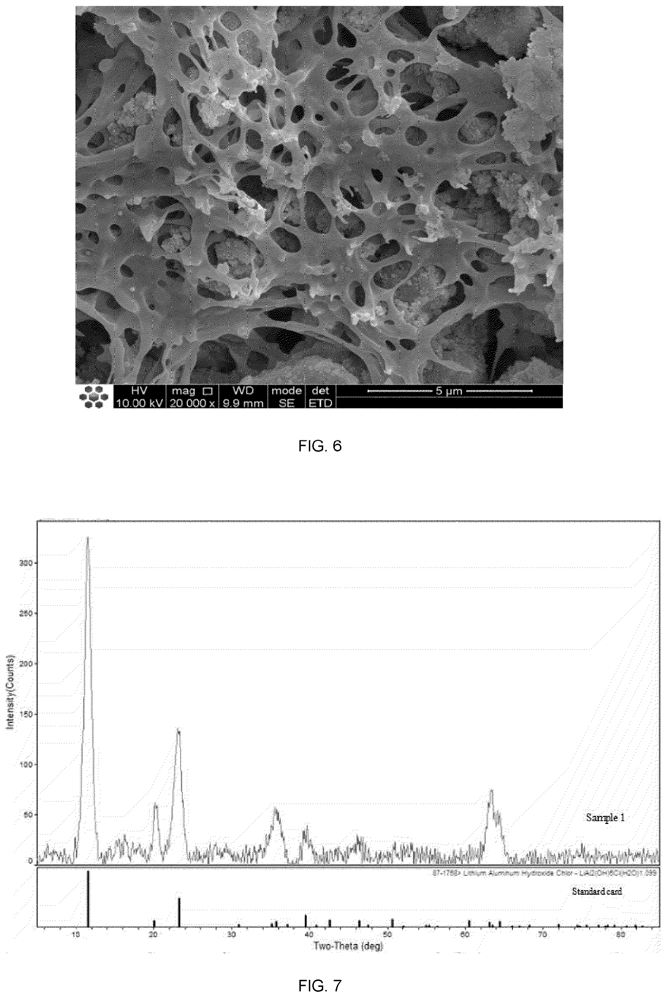

step 1 preparing a mesoporous aluminum-based lithium adsorbent precursor:
   mixing 500g polyaluminum (food grade, aluminum content of 15.1%), 57.5g anhydrous lithium chloride or lithium chloride solution with the same Li equivalent with water (solid content controlled as 28.5%), stirring under ultrasound at 40KHZ for 15 minutes to obtain a clear aluminum-lithium mixed solution, then, adding 3.5mol/L NaOH solution to the mixed solution under continuous stirring conditions, controlling the adding time as 45 minutes, and adding at a constant speed; controlling pH at the endpoint as 7.7 to obtain the aluminum lithium precursor slurry; then, carrying out solid-liquid separation, microwave drying and dehydration at 95°C, grinding through a 100-mesh ~ 250-mesh sieve to obtain the mesoporous aluminum-based lithium adsorbent precursor, with mesopores of irregular polygons, as shown in Fig. 2. The mesopores account for 95.1%, and the most probable pore size is 3.95nm;
step 2 molding and granulating:
   A) preparation of a composite resin: mixing 30.1g chlorinated polyvinyl chloride resin (CPVC) with 290.3g DMAC solvent, and adding 3.5g polyvinyl alcohol, stirring until being completely dissolved, to obtain a composite resin adhesive;
   B) doping and blending: mixing the mesoporous aluminum-based lithium adsorbent precursor obtained from step 1 with the composite resin adhesive obtained from A of step 2 according to the mass ratio of 1:1.16, and stirring evenly to obtain a blending slurry;
   C) granulating: dropping the blending slurry obtained from step B into water for solidification and molding through a granulation device (prior art), and sieving 0.5-2 mm particles to achieve a granulation yield of 98%.
and step 3 washing and drying:
   washing and vacuum drying the molded adsorbent obtained from step 2 at 60°C to obtain the sphere-like mesoporous aluminum-based lithium adsorbent 1^{#}. The XRD spectrum is consistent with the LiCl.2Al(OH)₃.1.099H₂O spectrum (see Fig. 7) of the standard card. The moisture content of the adsorbent is 10%, and the measured porosity is 71.5%; the specific gravity is 0.41, and the mesopores account for 95.7%; the most probable pore size is 3.93nm.

### Embodiment 2:

The preparation method for the mesoporous aluminum-based lithium adsorbent is the same as that in Embodiment, and the only difference lies in that the amount of LiCl in step 1 of Embodiment 1 is adjusted to 42.1g. Finally the sphere-like mesoporous aluminum-based lithium adsorbent 2^{#} is obtained, with the mesopores accounting for 93.7%, and the most probable pore size of 5.7nm.

### Embodiment 3:

The preparation method for the mesoporous aluminum-based lithium adsorbent is the same as that in Embodiment, and the only difference lies in that LiCl in step 1 of Embodiment 1 is replaced with LiOH. Finally the sphere-like mesoporous aluminum-based lithium adsorbent 3^{#} is obtained, with the mesopores accounting for 95.7%, and the most probable pore size of 3.97nm.

### Embodiment 4:

The preparation method for the mesoporous aluminum-based lithium adsorbent is the same as that in Embodiment, and the only difference lies in that LiCl in step 1 of Embodiment 1 is replaced with Li₂SO₄. Finally the sphere-like mesoporous aluminum-based lithium adsorbent 4^{#} is obtained, with the mesopores accounting for 87.7%, and the most probable pore size of 12.8nm.

### Embodiment 5:

The preparation method for the mesoporous aluminum-based lithium adsorbent is the same as that in Embodiment, and the only difference lies in that LiCl in step 1 of Embodiment 1 is replaced with equivalent lithium carbonate. Finally the sphere-like mesoporous aluminum-based lithium adsorbent 5^{#} is obtained, with the mesopores accounting for 92.7%, and the most probable pore size of 7.8nm.

### Comparative example 1:

The aluminum source in Embodiment 1 is replaced with AlCl₃.6H₂O, and the rest are the same as Embodiment 1. A sphere-like aluminum-based lithium adsorbent 5 is prepared, with mesopores accounting for 67.7% and the most probable pore size of 19.3nm.

### Comparative example 2:

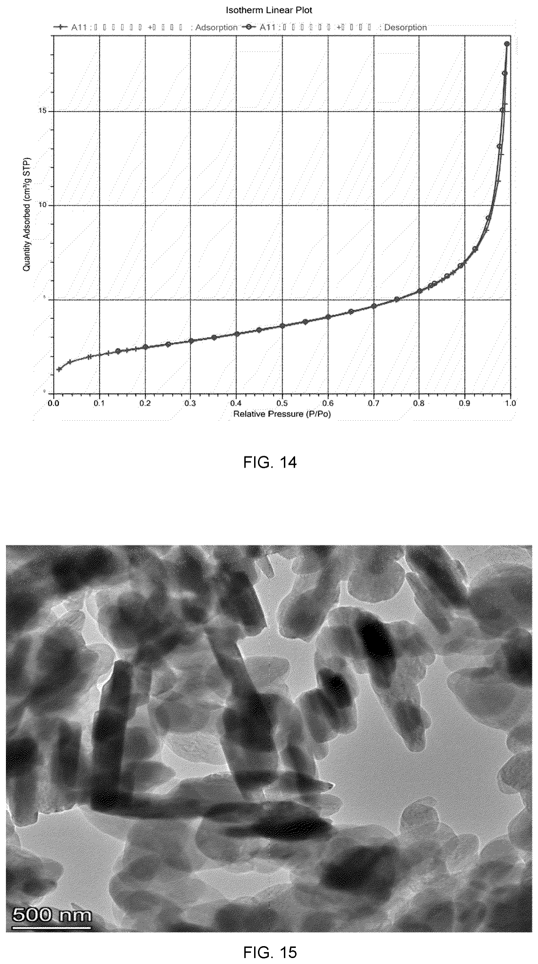

Al(OH)₃ as the aluminum source, 150g Al(OH)₃, 51.3g monohydrate LiOH, and 600g water are mixed for ball milling for two hours, then, heat is preserved at 90°C for two hours, 3mol/L hydrochloric acid is added to adjust the pH at the endpoint to 7, and the rest are similar to that of the sphere-like aluminum-based lithium adsorbent 6 prepared in Embodiment 1. According to the isothermal adsorption elution curve in Fig. 14, the adsorbent is a non-mesoporous material. Combined with the TEM spectrum in Fig. 15, the average pore size of the adsorbent material is greater than 50nm.

The sphere-like aluminum-based lithium adsorbents obtained from Embodiments 1-4 and comparative examples 1-2 are subject to lithium extraction performance assessment, and the specific operation is as follows:
The sphere-like aluminum-based lithium adsorbents obtained from Embodiments 1-4 and comparative examples 1-2 are filled in chromatographic columns respectively, and subject to one-way adsorption-washing-desorption assessment with simulated brine 1, simulated brine 2 and simulated brine 3 respectively. The flow rate of the adsorbed brine is 2.6 Bv/h, and the flow rate of washing pure water is 3.5 Bv/h. The washing volume is 0.8 Bv, and the desorption flow rate is 4 Bv/h. Deionized water is used to pass through the column at 20 °C for one hour. The test results and desorption solution data are as follows:

| **Embodi ment** | **Simul ated brine** | **Li adsorption capacity (g/L)** | **Impurity content of desorption solution (mg/L)** | | | | | **Na/Li mass ratio** | **Mg/Li mass ratio** |
|---|---|---|---|---|---|---|---|---|---|
| | | | Li | Na | Mg | K | SO₄²⁻ | | |
| **1** | 1 | 3.4 | 361 | 1.1 | 33 | 1.3 | 0.5 | <0.01 | 0.09 |
| | 2 | 3.2 | 331 | 12 | 12 | 1.1 | 0.5 | 0.04 | <0.04 |
| | 3 | 4.6 | 489 | 13 | 5.3 | 2.1 | 0.5 | 0.03 | <0.01 |
| **2** | 1 | 3.3 | 353 | 1.1 | 43 | 1.1 | 0.5 | <0.01 | 0.12 |
| | 2 | 3.1 | 323 | 15 | 14 | 1.1 | 0.5 | 0.05 | <0.05 |
| | 3 | 4.5 | 477 | 19 | 3.9 | 1.1 | 0.5 | 0.04 | <0.01 |
| **3** | 1 | 3.5 | 371 | 2.1 | 94 | 1.3 | 0.5 | <0.01 | 0.25 |
| | 2 | 3.3 | 347 | 18 | 19 | 2.8 | 0.5 | 0.05 | 0.06 |
| | 3 | 4.9 | 517 | 15 | 4.2 | 1.1 | 0.5 | <0.03 | <0.01 |
| **4** | 1 | 3.0 | 318 | 1.8 | 115 | 1.1 | 0.5 | 0.006 | 0.36 |
| | 2 | 2.7 | 291 | 13 | 52 | 6.3 | 0.5 | <0.05 | 0.18 |
| | 3 | 4.2 | 445 | 53 | 6.3 | 2.1 | 0.5 | 0.12 | <0.02 |
| **5** | 1 | 3.4 | 363 | 2.5 | 73 | 1.3 | 0.5 | <0.01 | 0.20 |
| | 2 | 3.2 | 341 | 10.1 | 16.3 | 3.9 | 0.5 | 0.03 | 0.05 |
| | 3 | 4.6 | 487 | 23 | 4.8 | 1.8 | 0.5 | 0.05 | <0.01 |
| **Comparati ve example 1** | 3 | 3.6 | 376 | 197 | 43 | 7.3 | 0.5 | 0.52 | 0.12 |
| **Comparati ve example 2** | 3 | 1.9 | 183 | 123 | 37 | 6.3 | - | 0.73 | 0.20 |

According to the above table, the prepared sphere-like aluminum-based lithium adsorbents 1^{#}-5^{#} can be effectively used for lithium extraction from high Mg, low Li brine (such as simulated brine 1, Mg content of 113g/L), and the lithium adsorption capacity is up to 3-3.5g/L (8mg/g-9.5mg/g), thus the Mg/Li mass ratio of the desorption solution is 0.01-0.4. In addition, such sphere-like aluminum-based lithium adsorbents 1^{#}-5^{#} can be effectively used for lithium extraction from high sodium brine (Na content of 100g/L), and the lithium adsorption capacity is up to 4.0-4.9g/L (10mg/g-13mg/g), thus the Na/Li mass ratio of the obtained desorption solution is less than or equal to 0.03, and the lithium adsorption capacity and the impurity selectivity are both superior to those of the aluminum-lithium adsorbents prepared in comparative examples 1, 2.

The lithium extraction performance of the mesoporous aluminum-based lithium adsorbent prepared in the present invention is superior to that of the microporous aluminum adsorbent disclosed in the patent CN106076243A, and the comprehensive lithium extraction performance is remarkably superior to that of the macroporous aluminum-based lithium adsorbent.

### Embodiment 6:

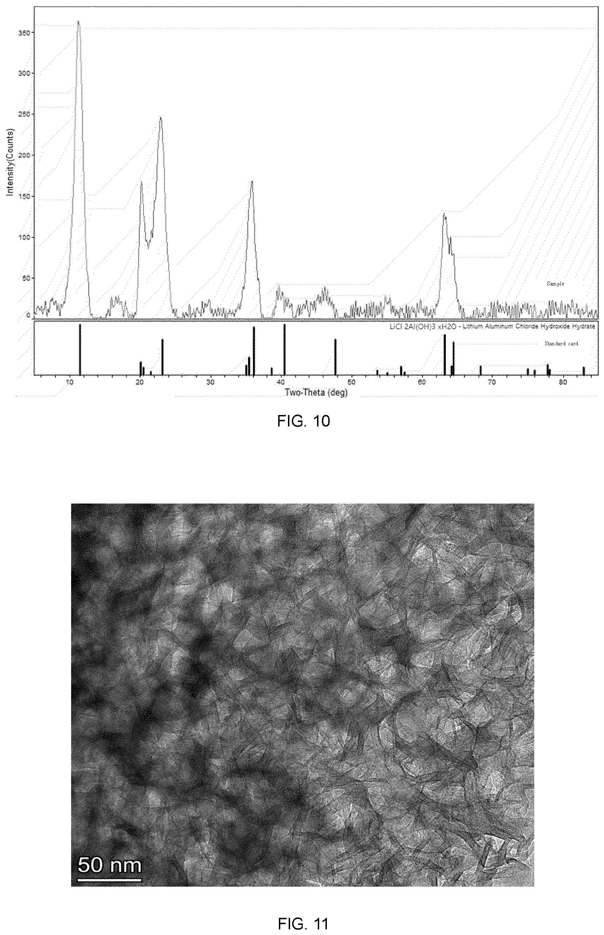

step 1 preparing a mesoporous aluminum-based lithium adsorbent precursor:
   mixing 500g polyaluminum (food grade, aluminum content of 15.1%), 51.5g anhydrous lithium chloride with 750g water, stirring under ultrasound at 40KHZ for 15 minutes to obtain a clear aluminum-lithium mixed solution, then, adding 2.0mol/L sodium carbonate aqueous solution to the mixed solution under continuous stirring conditions, controlling the adding time as 30 minutes, and adding at a constant speed; stirring reaction for one hour, controlling pH at the endpoint as 7.1 to obtain the aluminum lithium precursor slurry; then, carrying out solid-liquid separation, vacuum drying and dehydration at 80°C, grinding through a 100-mesh ~ 200-mesh sieve to obtain the mesoporous aluminum-based lithium adsorbent precursor, with mesopores of irregular polygons, as shown in Fig. 11. The mesopores account for 96.1%, and the most probable pore size is 5.6nm;
step 2 molding and granulating:
   A) preparation of a composite resin: mixing 30.1g polymer resin polyarylsulfone (PSAF) with 290.3g DMAC solvent, and adding 3.5g CPVC, stirring until being completely dissolved, to obtain the composite resin adhesive;
   B) doping and blending: mixing the lithium-based aluminum adsorbent precursor obtained from step 1 with the composite resin adhesive obtained from A of step 2 according to the mass ratio of 1:1.2, and stirring evenly to obtain a blending slurry;
   C) granulating: dropping the blending slurry obtained from step B into water for solidification and molding through a turntable granulation device, and sieving 0.5-1.5 mm particles to achieve a granulation yield of 98%.
and step 3 washing and drying:
   washing and vacuum freeze drying (vacuum degree: 0.5Pa, temperature: -18°C) the molded adsorbent prepared from step 2 for 10 hours, to obtain the sphere-like aluminum-based lithium extraction adsorbent 6^{#}. Its XRD spectrum being consistent with the LiCl.2Al(OH) ₃xH2O spectrum of the standard card (see Fig. 10). The moisture content of the adsorbent is 6.3%, and the measured porosity is 80.1%; the specific gravity is 0.37, and the mesopores account for 96.1%; the most probable pore size is 5.5nm.

### Embodiment 7:

The preparation method for the mesoporous aluminum-based lithium adsorbent is the same as that in Embodiment 6, and the only difference lies in that the polymer resin in step A of Embodiment 6 is replaced with sulfonated polysulfone. Finally the sphere-like aluminum-based lithium adsorbent 7^{#} is obtained, with the measured moisture content of 7.9%, specific gravity of 0.33, porosity of 79.6%, mesopores accounting for 96.3%, and the most probable pore size of 5.8nm.

### Embodiment 8:

The preparation method for the mesoporous aluminum-based lithium adsorbent is the same as that in Embodiment 6, and the only difference lies in that the polymer resin in step A of Embodiment 5 is replaced with polysulfone. Finally the sphere-like mesoporous aluminum-based lithium adsorbent 8^{#} is obtained, with the measured moisture content of 6.9%, porosity of 76.1%, specific gravity of 0.39, mesopores accounting for 93.7%, and the most probable pore size of 5.5nm.

### Embodiment 9:

The preparation method for the mesoporous aluminum-based lithium adsorbent is the same as that in Embodiment 6, and the only difference lies in that the polymer resin in step 1 of Embodiment 5 is replaced with chlorinated polyvinyl chloride, while the additive is replaced with polysulfone resin. Finally the sphere-like mesoporous aluminum-based lithium adsorbent 9^{#} is obtained, with the measured moisture content of 5.9%, porosity of 79.1%, specific gravity of 0.35, mesopores accounting for 96.1%, and the most probable pore size of 5.2nm.

### Embodiment 10:

The preparation method for the mesoporous aluminum-based lithium adsorbent is the same as that in Embodiment 6, and the only difference lies in that the polymer resin in step 1 of Embodiment 5 is replaced with fluorinated polyvinyl chloride, while the additive is replaced with polysulfone resin. Finally the sphere-like mesoporous aluminum-based lithium adsorbent 10^{#} is obtained, with the measured moisture content of 6.6%, porosity of 80.2%, mesopores accounting for 96.3%, and the most probable pore size of 5.1nm.

### Comparative example 3

The preparation method is the same as that in Embodiment 5, and the only difference lies in that the polymer resin in step 1 of Embodiment 5 is replaced with polyvinylidene fluoride. Finally the sphere-like aluminum-based lithium adsorbent is obtained, with the measured moisture content of 7.1%, the porosity of 73.7%, the mesoporous accounting for 75.3%, and the most probable pore size of 6.9nm.

### Comparative example 4

85g mesoporous aluminum-based lithium adsorbent precursor powder prepared in Embodiment 5 is weighed, mixed with 15g modified acrylic water-based resin (50%) and 10g water thoroughly, and the effective proportion of the powder in the molding material is controlled as 85%. A granular mesoporous aluminum-based lithium adsorbent is obtained by extruding small cylindrical particles with a diameter of 1.5mm using a granulator and drying at 80 °C for 24 hours. The mesopores account for 53.3%.

The mesoporous aluminum-based lithium adsorbent prepared in Embodiments 6-10 and the aluminum-based lithium adsorbent obtained in comparative example 3 and comparative example 4 are subject to performance assessment with simulated brine 1 and 3, respectively. The test results and desorption solution data are as follows:

| **Embodi ment** | **Simulated brine** | **Li adsorption capacity (g/L)** | **Impurity content of desorption solution (mg/L)** | | | | | **Na/Li mass ratio** | **Mg/Li mass ratio** |
|---|---|---|---|---|---|---|---|---|---|
| | | | Li | Na | Mg | K | SO₄²⁻ | | |
| **6** | 1 | 3.3 | 329 | 1.1 | 31 | 0.5 | 0.5 | <0.01 | 0.09 |
| | 3 | 4.7 | 496 | 11 | 6.1 | 0.7 | 0.5 | <0.03 | <0.012 |
| **7** | 1 | 3.2 | 340 | 1.1 | 63 | 0.8 | 0.5 | <0.01 | 0.19 |
| | 3 | 4.6 | 483 | 23 | 11.3 | 2.1 | 0.5 | <0.05 | 0.23 |
| **8** | 1 | 3.0 | 317 | 1.1 | 41 | 0.6 | 0.5 | <0.01 | 0.13 |
| | 3 | 4.3 | 434 | 15 | 8.1 | 1.6 | 0.5 | <0.04 | 0.018 |
| **9** | 1 | 3.5 | 356 | 1.1 | 23 | 0.3 | 0.5 | <0.01 | 0.063 |
| | 3 | 4.7 | 497 | 17 | 5.6 | 0.5 | 0.5 | <0.04 | 0.011 |
| **10** | 1 | 3.8 | 401 | 2.3 | 31 | 1.3 | 0.5 | <0.01 | 0.08 |
| | 3 | 5.0 | 521 | 33 | 8.9 | 0.7 | 0.5 | <0.07 | 0.017 |
| **Comparativ c example 3** | 1 | 2.7 | 283 | 310 | 553 | 5.8 | - | 1.11 | 1.95 |
| | 3 | 4.3 | 451 | 530 | 53 | 16 | - | 1.18 | 0.12 |
| **Comparati ve example 4** | 1 | 2.1 | 227 | 133 | 181 | 18 | - | 0.58 | 0.79 |
| | 3 | 2.8 | 295 | 133 | 37 | 6 | - | 0.45 | 0.13 |

According to the above table, the sphere-like aluminum-based lithium adsorbent prepared in Embodiments 6-10 of the present invention exhibits a good impurity separation ration, which is not only applied to lithium extraction from high Mg brine (such as simulated brine 1, Mg content of 113g/L), but also can be effectively used for lithium extraction from high sodium brine (Na content of 103g/L). For example, the aluminum-based lithium adsorbent prepared in Example 9 is used to adsorb and extract lithium, and the Na/Li mass ratio and Mg/Li mass ratio of the desorption solution are both less than 0.1. The lithium extraction performance and impurity separation effect are significantly superior to those in comparative example 3 and comparative example 4.

### Embodiment 11:

The preparation method is the same as that in Embodiment 10, and the only difference lies in that the drying method in step 3 is freeze drying. Upon drying at -10°C and freezing for 8 hours, the sphere-like aluminum-based lithium adsorbent is prepared, with the moisture content of 30%, the porosity of 77.7%, specific gravity of 0.38, mesopores accounting for 98.5%, and the most probable pore size of 4.9nm.

### Embodiment 12:

The preparation method is the same as that in Embodiment 10, and the only difference lies in that the drying method in step 3 is freeze drying. Upon drying at -15°C and freezing for 6 hours, the sphere-like aluminum-based lithium adsorbent is prepared, with the moisture content of 58%, the porosity of 79.7%, specific gravity of 0.35, mesopores accounting for 98.7%, and the most probable pore size of 5.1nm.

### Embodiment 13:

The preparation method is the same as that in Embodiment 10, and the only difference lies in that the drying method in step 3 is forced air drying. Upon drying at 100°C for 12 hours, the sphere-like aluminum-based lithium adsorbent is prepared, with the moisture content of 5%, the porosity of 71.7%, mesopores accounting for 91.3%, and the most probable pore size of 5.9nm.

### Embodiment 14:

The preparation method is the same as that in Embodiment 10, and the only difference lies in that the drying method in step 3 is infrared drying. Upon drying at 85°C for 10 hours, the sphere-like aluminum-based lithium adsorbent is prepared, with the moisture content of 13%, the porosity of 68.7%, specific gravity of 0.50, mesopores accounting for 92.3%, and the most probable pore size of 5.7nm.

The sphere-like mesoporous aluminum-based lithium adsorbent obtained from the Embodiments 11-14 above is subject to adsorption assessment with simulated brine 3. The flow rate of the adsorption brine is 2.6Bv/h, and 0.8Bv deionized water is used for elution at a flow rate of 3.5Bv/h. The desorption flow rate is 4Bv/h, and the assessment test results are as follows:

| **Assessment Results of Simulated Brine 3 in Embodiments 10-14** | | | | | | | | |
|---|---|---|---|---|---|---|---|---|
| **Embodi ment** | Li adsorption capacity (g/L) | Impurity content of desorption solution (mg/L) | | | | | Na/Li mass ratio | Mg/Li mass ratio |
| | | Li | Na | Mg | K | SO₄²⁻ | | |
| **11** | 4.9 | 503 | 17 | 5.3 | 1.1 | 0.5 | 0.033 | 0.011 |
| **12** | 5.0 | 517 | 19 | 6.7 | 1.3 | 0.5 | 0.037 | 0.013 |
| **13** | 3.9 | 403 | 23 | 3.6 | 1.1 | 0.5 | 0.057 | <0.01 |
| **14** | 4.3 | 441 | 13 | 3.1 | 1.0 | 0.5 | 0.029 | <0.01 |

### Embodiment 10Assessment on service life cycle of mesoporous aluminum-based lithium adsorbent:

The mesoporous aluminum-based lithium adsorbent prepared by the method in Embodiment 10 is subject to a continuous cycle life test, to simulate industrial continuous one-way columnar dynamic adsorption and desorption, with1087-1503 cycles. The test is carried out using the following brine, and the specific test results are as follows:
Brine 1

| **PH** | **Li⁺** | **Na⁺** | **K⁺** | **Ca²⁺** | **Mg²⁺** | **B³** |
|---|---|---|---|---|---|---|
| **4.0** | 271 | 2890 | 22330 | 57 | 113100 | 919 |

Brine 2

| **PH** | **Li⁺** | **Na⁺** | **K⁺** | **Ca²⁺** | **Mg²⁺** | **B³-** |
|---|---|---|---|---|---|---|
| **6.1** | 661 | 98890 | 9130 | 1103 | 2310 | 619 |

Brine 3

| **PH** | **Li⁺** | **Na⁺** | **K⁺** | **Ca²⁺** | **Mg²⁺** | **B³-** |
|---|---|---|---|---|---|---|
| **7.5** | 691 | 99830 | 9217 | 905 | 2213 | 689 |

Cyclic Test results of Brine 1

| **Number of cycles** | **Li adsorption capacity (g/L)** | **Li elution rate (%)** | **Solution loss (%)** |
|---|---|---|---|
| **1** | 2.6 | 98.5 | ≤1.2 |
| **300** | 2.5 | 95.3 | |
| **600** | 2.5 | 95.4 | |
| **900** | 2.6 | 99.1 | |
| **1116** | 2.5 | 97.7 | |
| **1503** | 2.5 | 97.7 | |

Cyclic Test results of Brine 2

| **Number of cycles** | **Li adsorption capacity (g/L)** | **Li elution rate (%)** | **Solution loss (%)** |
|---|---|---|---|
| **1** | 3.1 | 98.5 | ≤0.001 |
| **300** | 3.0 | 95.3 | 0.3 |
| **600** | 2.9 | 95.4 | 0.6 |
| **900** | 3.0 | 99.1 | 0.9 |
| **1200** | 3.1 | 97.7 | 1.2 |
| **1500** | **3.0** | **97.5** | 1.5 |

Cyclic Test results of Brine 3

| **Number of cycles** | **Li adsorption capacity (g/L)** | **Li elution rate (%)** | **Solution loss (%)** |
|---|---|---|---|
| **1** | 3.3 | 98.5 | |
| **300** | 3.2 | 95.3 | |
| **600** | 3.4 | 95.4 | ≤1.1 |
| **900** | 3.3 | 99.1 | |
| **1087** | 3.1 | 97.0 | |

From the above embodiments, it can be seen that the mesoporous aluminum-based lithium adsorbent of the present invention has a high proportion of mesopores, and the distribution of mesopores and the most probable pore size of the adsorbent powder do not change much before and after molding. The mesopores are "irregular polygons". The average pore size of this mesoporous aluminum-based lithium adsorbent is 3-20nm, and its adsorption and desorption performance is better when the most probable pore size is in the range of 3-10nm.

The patent (CN115487777A) reports an aluminum-based lithium ion adsorbent with good cyclic stability. The aluminum-based lithium ion adsorbent has been recycled 360 times with a solution rate of 1.5%. The mesoporous aluminum-based lithium adsorbent prepared in Embodiment 6 of the present invention is also subject to brine adsorption and desorption cyclic tests. After running continuously for 1500 cycles, its activity shows almost no attenuation, and the adsorbent has an extremely low solution rate. Therefore, the adsorbent of the present invention can significantly reduce the amount of foreign objects entering the salt lake brine during recycling, which is beneficial for protecting the ecological environment of salt lake regions.

Porosity measurement: a measuring cylinder takes a certain mass of adsorbent particles, and a certain amount of deionized water is added to the measuring cylinder; after the particles are fully immersed in water, then the surface overflow water is adsorbed with filter paper after sonicating for 5 minutes, and the mass of water added m1 (accurate to 0.1mg) is read as the water absorption volume; water is continuously added to the scale V₁ mL. If the mass of water added is m₂, the porosity calculation formula is: Φ = m1 /( V1- m1- m2) x 100%; the average value is taken after measurement for 5 times;

Solution rate simulation (1200 cycles) test method: 10mL lithium adsorbent is taken, dried to a constant weight W₁ (accurate to 0.1mg), and pure lithium chloride solution (Li concentration of 0.7g/L) is used to adsorb in a constant temperature shaking bath at 25°C for 1 hour and deionized water to elute at 25°C for one hour. After 50 cycles, the lithium adsorbent is taken out and dried to a constant weight of W₂ (accurate to 0.1mg). The annual solution loss rate (1200 cycles) Rs=(W₁-W₂)/W₁/50x1200x100%.

The above description of preferred embodiments should not be interpreted in a limiting manner since those of ordinary skill in the art can make improvements or changes according to the aforesaid description, and all these improvements and changes should fall into the protection scope of the claims of the present invention.

## Claims

1. A preparation method for a mesoporous aluminum-based lithium adsorbent, **characterized by** comprising the following steps:
step 1 preparing a mesoporous aluminum-based lithium adsorbent precursor:
mixing polyaluminum, lithium source, and water to obtain an aluminum-lithium mixed solution through ultrasonic stirring, then, gradually adding alkali liquor to the aluminum-lithium mixed solution for precipitation reaction, controlling the adding time as 20-90 minutes, controlling the synthesis reaction temperature as 0-80 °C, and controlling the pH at the reaction endpoint as 5-9; filtering and separating the aluminum-lithium precursor precipitate from the liquid, and then drying and crushing it to obtain the mesoporous aluminum-based lithium adsorbent precursor;
step 2 molding and granulating:
A) preparation of a composite resin: mixing a polymer resin with an organic solvent, adding an appropriate amount of additive, stirring until being completely dissolved, to obtain a composite resin adhesive;
B) doping and blending: mixing the composite resin adhesive obtained from A) with the mesoporous aluminum lithium precursor obtained from step 1 in proportion, and stirring evenly to obtain a blending slurry;
C) granulating: dropping the blending slurry into the solidification liquid for granulation through a granulation device, and then sieving to obtain a molded adsorbent;
and step 3 washing and drying:
washing, activating and drying the molded adsorbent obtained from step 2 to obtain the mesoporous aluminum-based lithium adsorbent.

2. The preparation method according to claim 1, **characterized in that**, the polyaluminum in step 1 is drinking water grade or food grade polyaluminum chloride; the lithium source is selected from any one or a mixture of lithium chloride, lithium hydroxide, lithium carbonate, and lithium sulfate; the alkali liquor is any one of sodium carbonate, sodium hydroxide, or potassium hydroxide aqueous solutions, and the concentration of the alkali liquor is 1mol/L-8mol/L.

3. The preparation method according to claim 1, **characterized in that**, the addition amount of polyaluminum and lithium source in step 1 is 4.5:1-1.95:1 according to the molar ratio of aluminum to lithium; a solid content is controlled as 15wt%-35wt% by the amount of water added.

4. The preparation method according to claim 1, **characterized in that**, the drying method in step 1 is any one of vacuum drying, freeze drying, flash drying, microwave drying, or hot air drying, and the obtained aluminum-based lithium adsorbent precursor has a moisture content of 1%-6%; the aluminum-based lithium adsorbent precursor is a porous material, with pores of irregular polygons, mesopores accounting for more than 85%, an average pore size of 3-30nm, and the most probable pore size of 3-20nm.

5. The preparation method according to claim 1, **characterized in that**, the polymer resin in A) of step 2 is any one of fluorinated polyvinyl chloride, chlorinated polyvinyl chloride, polyarylsulfone or sulfonated polysulfone; the additive is any one of polyvinyl alcohol, polyether sulfone, or chlorinated polyvinyl chloride; in this step, the obtained composite resin adhesive has a solid content controlled as 5wt%-20wt%; the organic solvent is any one of dimethylacetamide, tetrahydrofuran, or dimethylformamide.

6. The preparation method according to claim 1, **characterized in that**, the mass ratio of the aluminum-based lithium adsorbent precursor in B) of step 2 to the composite resin adhesive is 1:1.2-2; the blending slurry has a solid content controlled as 35wt%-50wt%.

7. The preparation method according to claim 1, **characterized in that**, the solidification liquid in C) of step 2 is any one of water or inorganic salt aqueous solution; the inorganic salt aqueous solution has a mass concentration of 0.5%-5wt%; the pore size of the sieving is controlled as 0.2-3mm.

8. The preparation method according to claim 1, **characterized in that**, the drying method in step 3 is any one of vacuum drying, freeze drying, microwave drying or infrared drying, and the product moisture content after drying is 1%-65%.

9. A mesoporous aluminum-based lithium adsorbent obtained from the method according to any of claims 1-8, **characterized in that**, the mesoporous aluminum-based lithium adsorbent has mesopores accounting for more than 90%, an average pore size of 3-20nm, the most probable pore size of 3-10nm, a morphology of being spherical or sphere-like-like, and a density of 0.3-0.5g/mL.

10. Application of the mesoporous aluminum-based lithium adsorbent according to claim 9, **characterized in that**, the adsorbent is applied to lithium extraction from brine with high magnesium-lithium ratio, salt lake brine with low lithium concentration, or lithium extraction from salt lake brine with high sodium or potassium, or lithium extraction from lithium containing wastewater; the lithium adsorption capacity is 2.5-5.0g/L, and the lithium elution rate, lithium selectivity, and lithium recovery rate are all more than 95%.
